(19) Europäisches Patentamt
European Patent Office
Office européen des brevets

(11) EP 1 241 872 A2

(12) EUROPEAN PATENT APPLICATION

(43) Date of publication:
18.09.2002 Bulletin 2002/38

(51) Int Cl.⁷: **H04N 3/15**, H04N 5/217

(21) Application number: 02004558.9

(22) Date of filing: 27.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 28.02.2001 JP 2001053555

(71) Applicant: MATSUSHITA ELECTRIC INDUSTRIAL CO., LTD.
Kadoma-shi, Osaka 571-8501 (JP)

(72) Inventors:
• **Komobuchi, Hiroyoshi**
**Fushimi-ku, Kyoto-shi, Kyoto 612-8031 (JP)**

• **Morinaka, Yasuhiro**
**Kadoma-shi, Osaka 571-0064 (JP)**
• **Fujii, Toshiya**
**Otsu-shi, Shiga 520-0248 (JP)**
• **Inokuma, Kazuyuki**
**Yawata-shi, Kyoto 614-8324 (JP)**

(74) Representative: **Grünecker, Kinkeldey, Stockmair & Schwanhäusser Anwaltssozietät**
**Maximilianstrasse 58**
**80538 München (DE)**

(54) **Solid-state image pickup apparatus and method for driving the same**

(57)    The solid-state image pickup device permitting parallel readout having an image pickup section partitioned into strip blocks and a readout amplifier for each block further has: an input source; and a marker signal generation section for generating marker signals for correction of outputs of the readout amplifiers. The marker signal generation section has a marker charge storage portion made of capacitors for respectively storing an amount of charge corresponding to the potential at the input source. The marker signals having a same charge amount generated in the marker signal generation section are read through vertical CCDs of two adjacent blocks and corresponding horizontal CCDs and readout amplifiers sequentially.

FIG. 1

EP 1 241 872 A2

# Description

## BACKGROUND OF THE INVENTION

The present invention relates to a solid-state image pickup apparatus allowing parallel readout with an image pickup section partitioned into blocks, and a method for driving such a solid-state image pickup apparatus.

In the field of security and the field of digital still cameras, parallel readout type solid-state image pickup apparatuses have been sought for simultaneous achievement of high-definition image pickup and high-speed readout. In this type of image pickup apparatuses, correction of a variation among a plurality of outputs is required.

As a prior art example of use of a plurality of horizontal charge-coupled devices (CCDs) to achieve high-speed readout, known is a parallel readout type solid-state image pickup disclosed in U.S. Patent No. 4,598,321 (Prior art 1, issued on July 1, 1986). As prior art methods for correcting a variation among output signals, known are Japanese Laid-Open Patent Publication No. 2-78382 (Prior art 2, published on March 19, 1990) and Japanese Laid-Open Patent Publication No. 4-96480 (Prior art 3, published on March 27, 1992).

In the technique described in Prior art 1, signal charge is directed to the two ends of a horizontal CCD from the center thereof, that is, transferred in the opposing directions. The readout positions are therefore limited to the four corners at maximum, and thus higher speed by further partitioning is no more attained.

Prior arts 2 and 3 describe correction of output characteristics of two or more horizontal CCD channels. In these prior arts, however, the horizontal CCD has a structure of a plurality of channels arranged in the vertical transfer direction, so that charge transfer in the vertical direction is also allowed in the horizontal CCD, which essentially should perform charge transfer only in the horizontal direction. Due to this structure, the horizontal CCD tends to generate transfer degradation, which is known to cause a problem in practical use.

If the image pickup section is partitioned into strip blocks and horizontal CCDs are provided for the respective blocks to enable parallel output, the number of horizontal transfer steps can be reduced while the time-tested basic structure is maintained, and therefore the operation speed will improve. However, correction of a variation among output signals is not possible by the techniques described in Prior arts 2 and 3.

## SUMMARY OF THE INVENTION

An object of the present invention is providing a solid-state image pickup apparatus in which a correction signal for making reproduced images uniform among blocks (hereinafter, such a signal is called a marker signal) is generated in a marker signal generation section for correcting a variation in output characteristics among the blocks using the marker signal, and a method for driving such a solid-state image pickup apparatus.

According to the present invention, the solid-state image pickup apparatus permitting parallel readout includes an image pickup section partitioned into blocks and a readout amplifier for each block. The apparatus further includes: a marker signal source for supplying a required amount of charge; and a marker signal generation section for generating marker signals having a same charge amount to be sent into two adjacent blocks of the image pickup section from the charge supplied from the marker signal source, wherein each of the blocks of the image pickup section transfers the marker signal sent from the marker signal generation section so that the marker signal is read out via the readout amplifier for the block for correction of an output of the readout amplifier.

For example, in a solid-state image pickup apparatus allowing parallel readout with an image pickup section partitioned into strip blocks, a marker signal generation section is placed upstream of the image pickup section. Marker signals generated in the marker signal generation section are read from horizontal CCDs placed downstream of the blocks via the image pickup section.

According to the present invention, marker signals having a same charge amount are read as outputs of adjacent blocks alternately at a frame period or a field period, or even at a period shorter than the latter period. Using these marker signals, a variation among the input/output characteristics of amplifiers is calibrated by a correction circuit at a downstream stage, and thus boundaries between blocks are avoided from becoming noticeable.

## BRIEF DESCRIPTION OF THE DRAWINGS

FIG. **1** is a plan view of a configuration of an image pickup device of a solid-state image pickup apparatus of the present invention.

FIG. **2** is an equivalent circuit diagram of a readout amplifier in FIG. 1.

FIG. **3A** is an enlarged plan view of one phase gate at a marker charge storage portion in FIG. **1**.

FIG. **3B** is a plan view of other two phase gates formed on the one phase gate in FIG. **3A**.

FIG. **3C** is a plan view of yet another one phase gate formed on the two phase gates in FIG. **3B**.

FIG. **4** is a timing chart for depicting a method of generating a marker signal in the solid-state image pickup device of FIG. **1**.

FIG. **5A** is a potential diagram of vertical CCDs corresponding to the timing chart of FIG. **4**.

**FIG. 5B** is a continuation of the potential diagram of FIG. **5A**.

FIG. **6** is a potential diagram for depicting a method of adding a plurality of marker signals each having a unit charge amount in the vertical CCDs of the solid-state image pickup device of FIG. **1**.

FIG. **7** shows output characteristics of a plurality of marker signals generated by the method depicted in FIG. **6**.

FIG. **8** is a timing chart for depicting a method of generating a marker signal using the addition method depicted in FIG. **6**.

FIG. **9A** is a potential diagram of the vertical CCDs corresponding to the timing chart of FIG. **8.**

FIG. **9B** is a continuation of the potential diagram of FIG. **9A.**

FIG. **10** is a potential diagram showing that the charge amount of a marker signal in the vertical CCDs can be controlled by changing the potential at an input source in FIG. **1**.

FIG. **11** is a plan view of a configuration adopted to generate a plurality of marker signals having different charge amounts simultaneously in one block in FIG. **1**.

FIG. **12** is a block diagram of an entire configuration of the solid-state image pickup apparatus of the present invention.

FIG. **13** is a view representing a method of correcting the outputs of readout amplifiers of the solid-state image pickup apparatus of FIG. **12**.

FIG. **14** is a plan view of another configuration of an image pickup device of the solid-state image pickup apparatus of the present invention.

FIG. **15A** is an enlarged plan view of impurity injection portions for formation of vertical CCDs in FIG. **14**.

FIG. **15B** is a plan view of multi-phase gates formed on the impurity injection portions in FIG. **15A**.

FIG. **15C** is a plan view of other multi-phase gates formed on the multi-phase gates in FIG. **15B**.

FIG. **16** is a timing chart for depicting a method of generating a marker signal in the solid-state image pickup device of FIG. **14**.

FIG. **17A** is a potential diagram of vertical CCDs corresponding to the timing chart of FIG. **16**.

FIG. **17B** is a continuation of the potential diagram of FIG. **17A**.

## DESCRIPTION OF THE PREFERRED EMBODIMENTS

Hereinafter, an embodiment of the present invention will be described with reference to the accompanying drawings.

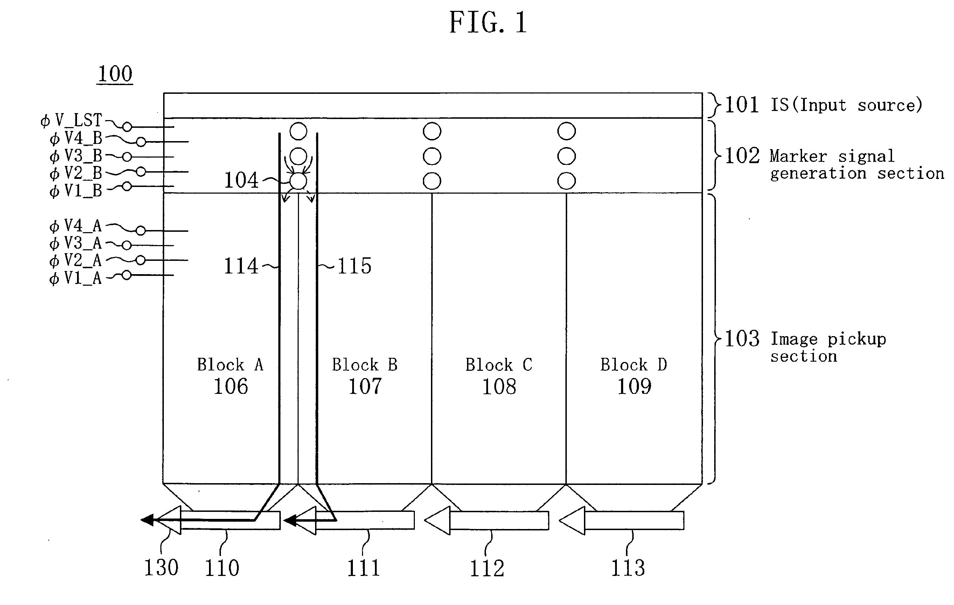

FIG. **1** illustrates an image pickup device of a solid-state image pickup apparatus of the present invention, which has a four-block parallel-output configuration using CCDs. The solid-state image pickup device of FIG. **1**, denoted by the reference numeral **100**, includes an input source (IS) **101**, a marker signal generation section **102**, marker charge storage portions (capacitors) **104**, blocks A to D (**106** to **109**) constituting an image pickup section **103**, horizontal CCDs **110** to **113**, and readout amplifiers (signal charge detectors) **130**. The marker signal generation section **102** is essentially composed of the marker charge storage portions **104** and part of vertical CCDs **114, 115**. The input source **101** serves as a marker signal source for supplying a required amount of charge to the marker signal generation section 102. Marker signals are generated in the marker signal generation section **102** at each boundary between adjacent blocks, and the generated marker signals are cyclically distributed to either of the adjacent two blocks.

As shown in FIG. **1**, the input source **101** is formed to have pn junction on the top ends of the vertical CCDs **114**, **115** of the marker signal generation section **102.** By controlling a voltage applied to one of impurity layers of the pn junction, the charge amount allowed to flow into the vertical CCDs **114**, **115** is controlled. In the portion of the marker signal generation section **102** near the boundary between the blocks A and B of the image pickup section **103**, the marker charge storage portion **104**, corresponding to a photo diode (PD) of the image pickup section **103**, stores a marker signal temporarily and sends it out by unit of field or frame to the right and left blocks alternately.

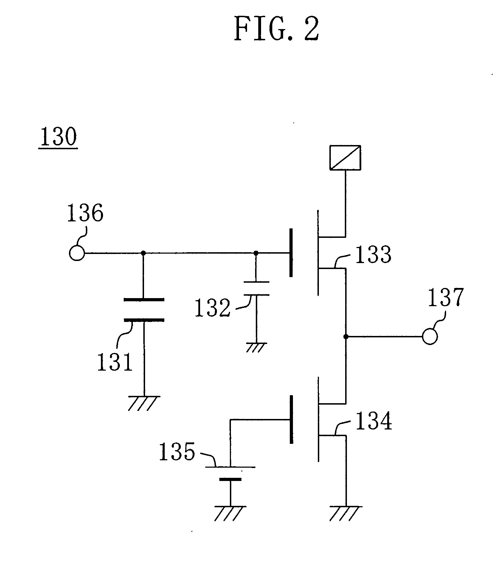

FIG. **2** is an equivalent circuit diagram of the readout amplifier **130** in FIG. **1**, showing a floating diffusion amplifier (FDA) generally used as a readout amplifier for a horizontal CCD, together with a source follower thereof. The readout amplifier **130** is essentially composed of a detection capacitance **131**, a parasitic capacitance **132**, a drive transistor **133**, a load transistor **134**, a gate voltage **135**, an input terminal **136**, and an output terminal **137**. The readout amplifiers **130** vary in input/output characteristics even when the same design conditions and the same process are adopted. There are various causes for the variation, including a variation in the detection capacitance **131** itself, a variation in the parasitic capacitance **132** relating to interconnections, and a variation in the mutual conductance value (gm) of the source follower (the drive transistor **133**, the load transistor **134**, and the gate voltage **135**). It is therefore difficult to eliminate all of these causes completely and realize uniform input/output characteristics. In consideration of the above, for calibration of absolute values among the readout amplifiers, it is required to generate a marker signal having a known signal charge amount in the marker signal generation section **102** and correct the input/output characteristics of the readout amplifiers **130** using the marker signal.

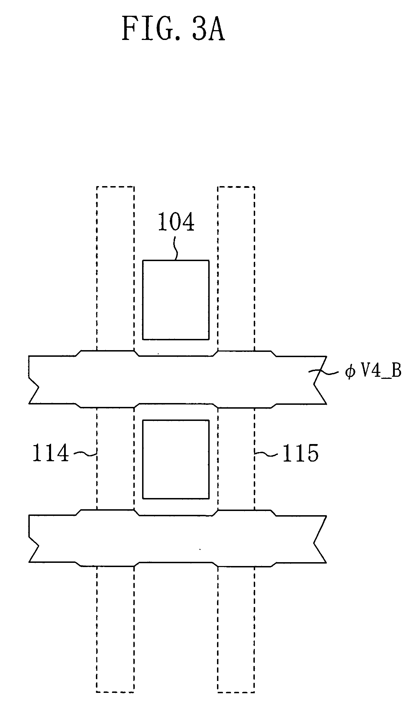

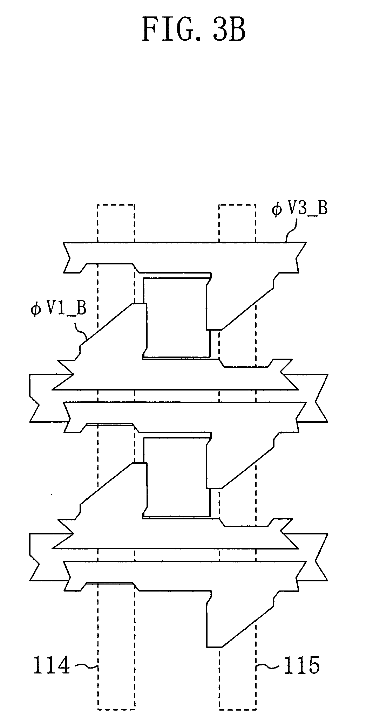

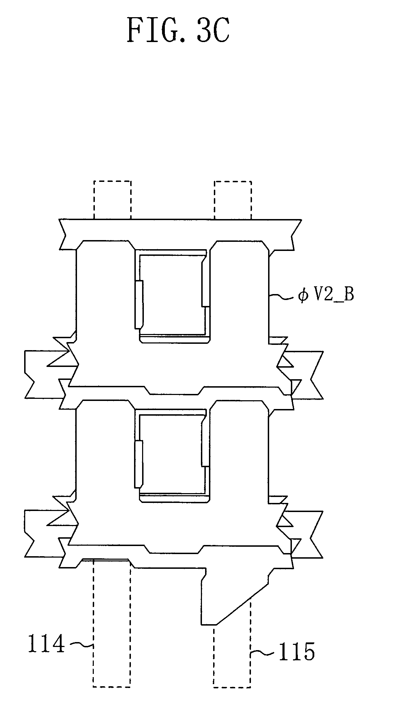

FIGS. **3A** to **3C** illustrate a process of formation of four phase gates φV4_B, φV3_B, φV2_B and φV1_B at the marker charge storage portion **104** in FIG. **1**, in which φV4_B is made of polysilicon of the first layer, φV3_B and φV1_B are made of polysilicon of the second layer, and φV2_B is made of polysilicon of the third layer. Among these gates, φV3_B and φV1_B are gates controlling flow of charge from the vertical CCDs **114, 115** to the marker charge storage portion **104** and flow of charge from the marker charge storage portion **104** to the vertical CCDs **114, 115**. Although not illustrated, the marker charge storage portion **104** is covered with a metal light-shading film at the top to block influence of incident light.

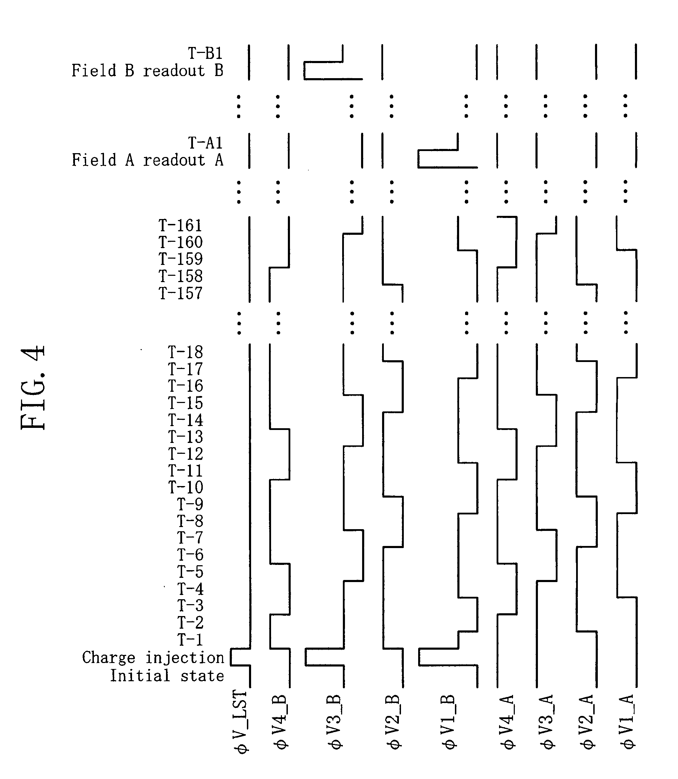

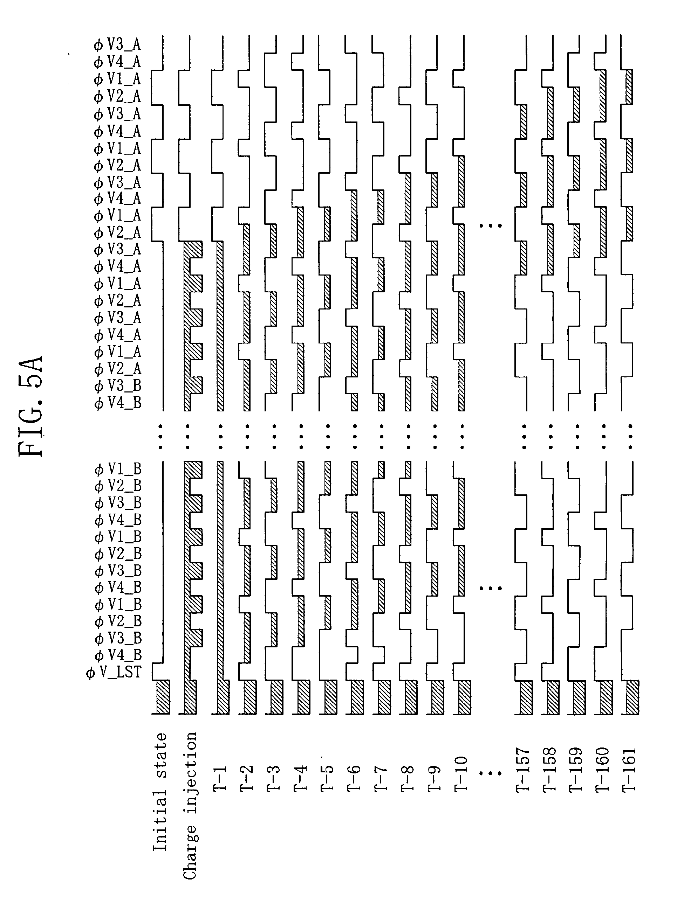

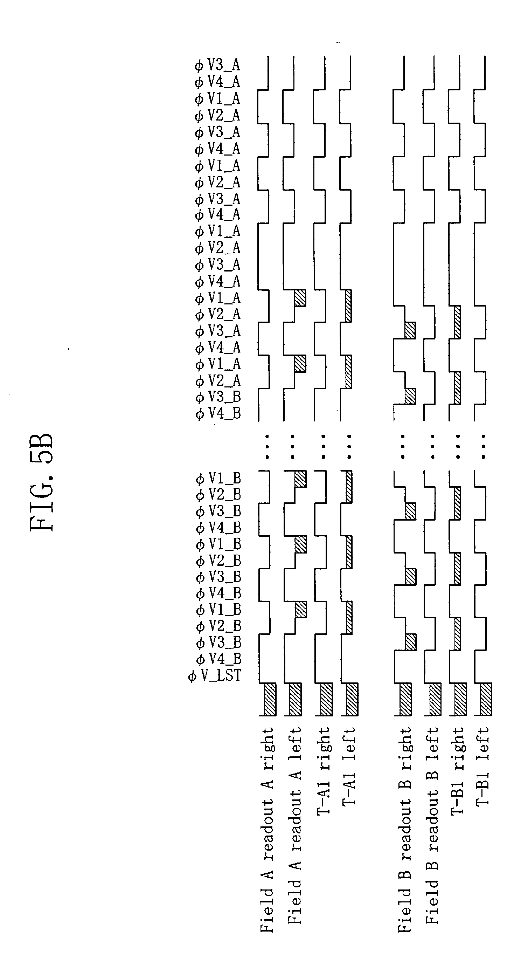

FIG. **4** is a timing chart for depicting a method of generating a marker signal in the solid-state image pickup device **100** of FIG. **1**. FIGS. **5A** and **5B** are potential diagrams of the vertical CCDs **114, 115** corresponding to the timing chart of FIG. **4**.

As described before, a marker signal needs to be stored in the marker charge storage portion **104**. The vertical CCDs **114, 115** are driven with the four phase gates φV4_B, φV3_B, φV2_B and φV1_B, in addition to φV_LST in the marker signal generation section **102**, and with four phase gates φV4_A, φ V3_A, φV2_A and φV1_A in the blocks A to D of the image pickup section **103**. FIG. **4** shows the timings of the initial state, charge injection, sequential operation from T-1 through T-161, readout A in field A, T-A1, readout B in field B, and T-B1.

First, φV_LST is turned on (0 V) at the timing of charge injection, to allow charge to be flown from the input source **101** into the vertical CCDs **114, 115**. Simultaneously, a voltage of 15 V is applied to φV1_B and φV3_B to open these gates.

Because the gate voltage at the φV_LST is sufficiently low with respect to the input source **101**, signal charge flows from the input source **101** into the marker charge storage portion **104** via the vertical CCDs **114, 115**, and thus the same potential is attained at the input source 101 and the marker charge storage portion **104**. In other words, the stored charge amount in the marker charge storage portion **104** is controlled by the potential at the input source **101**. Subsequently, at the timing of T-1, the readout gates φV1_B and φV3_B are closed, and the gate φV_LST is turned off (-8 V). At the timings of T-1 to T-161, pulses of LOW (-8 V) and HIGH (0 V) are sequentially applied, so that the charge is transferred from the marker signal generation section **102** to the image pickup section **103**, sweeping out charge in the portion of the vertical CCDs **114, 115** adjacent to the marker charge storage portion **10**4. A sequence of potential change with time is shown in T-1 through T-161 in FIG. **5A.** By the process described above, a marker signal is prepared in the marker charge storage portion **104**.

The marker signal stored in the marker charge storage portion **104** is read into the vertical CCD **114** on the left at the timing of readout A with φV1_B in field A, and into the vertical CCD **115** on the right at the timing of readout B with φV3_B in field B. As a result, the marker signal having the same charge amount is read from block A on the left in field A and from block B on the right in field B.

In the above description, the three-layer polysilicon gates for transfer of the marker signal were used for the vertical CCDs **114, 115**. Alternatively, each electrode of the vertical CCDs may be contacted individually. Otherwise, the number of polysilicon layers may be increased or decreased. No problem will occur by these alternative configurations.

The period of the timing at which the signal is read into the left or right vertical CCD **114, 115** may be every frame or every field. Although four-phase clock was used in the above description, the number of phases of the readout gates may be increased, to enable operation of four readout gates for two vertically-adjacent pixels at individual timings (six-phase driving). In this case, also, it is possible to read the marker signal into the right and left blocks alternately every horizontal line.

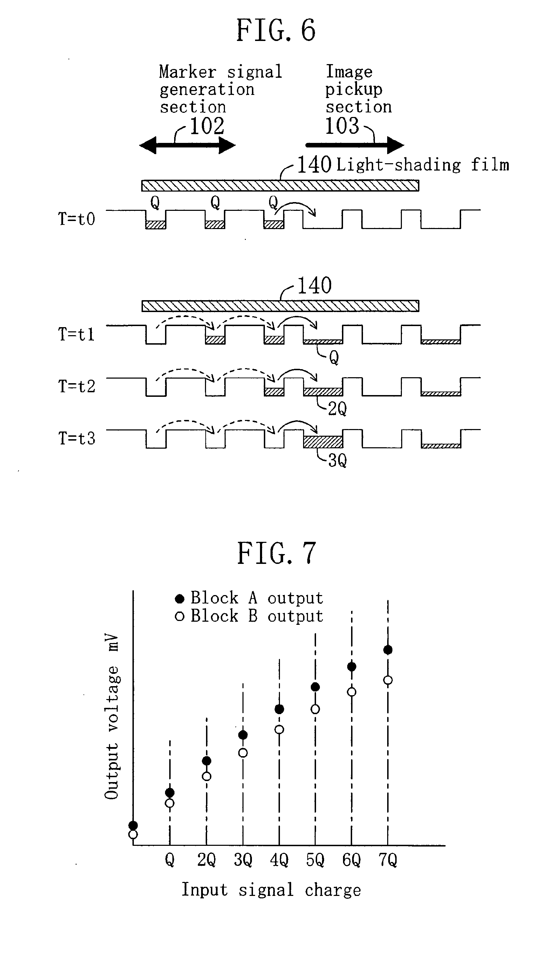

FIG. **6** illustrates a method of adding a plurality of marker signals each having a unit charge amount in the vertical CCDs **114, 115** of the solid-state image pickup device **100** of FIG. **1**. In the illustrated example, a plurality of marker signals are generated while the input source potential is kept constant. More specifically, marker signals are generated using charge transfer packets created in the portion of the vertical CCDs **114, 115** in the marker signal generation section **102**, and added together in the vertical CCDs **114, 115** at the boundary between the blocks of the image pickup section **103**. In this way, a plurality of marker signals can be obtained at one time. This operation can be realized with only the vertical CCDs **114, 115** requiring no involvement of the marker charge storage portion **104** described above. However, to generate marker signals better in uniformity among the blocks, it is desirable to store charge in the marker charge storage portion **104** temporarily and execute addition as shown in FIG. **6** when the charge is read out.

As shown in FIG. **1**, in each vertical CCD (**114, 115**, for example), the four phase gates φV4_B, φV3_B, φV2_B and φ V1_B are used in the marker signal generation section **102**, the four phase gates φV4_A, φV3_A, φV2_A and φV1_A are used in the image pickup section **103**, and the independent gate φV_LST is used at a position between the input source **101** and the marker signal generation section **102**. As shown in FIG. **6**, in each block, potential-controlled signal charge is allowed to flow from the input source **101** located upstream of the vertical CCDs **114, 115** into the vertical CCDs **114, 115**. FIG. **6** illustrates how marker signals Q, Q and Q carried independently, shown at T = t0, are added at the boundary between the marker generation section **102** and the image pickup section **103** as shown at timings T = t1 to t3, to generate Q, 2Q and 3Q at the respective timings. Note that the marker signal generation section **102** and the portion of the image pickup section **10**3 other than PDs are covered with a metal light-shading film **140**.

FIG. **7** is an output characteristic diagram of a plurality of marker signals generated in the manner shown in FIG. **6**. By sequentially outputting the marker signals Q, 2Q, 3Q, ... and 7Q independently, it is possible to output a plurality of marker signals as shown in FIG. **7**, in which black dots represent block A outputs while white dots represent block B outputs. Obviously, these marker signals may be generated in one field or over several fields. The addition may be executed during charge transfer from the vertical CCDs to the horizontal CCDs.

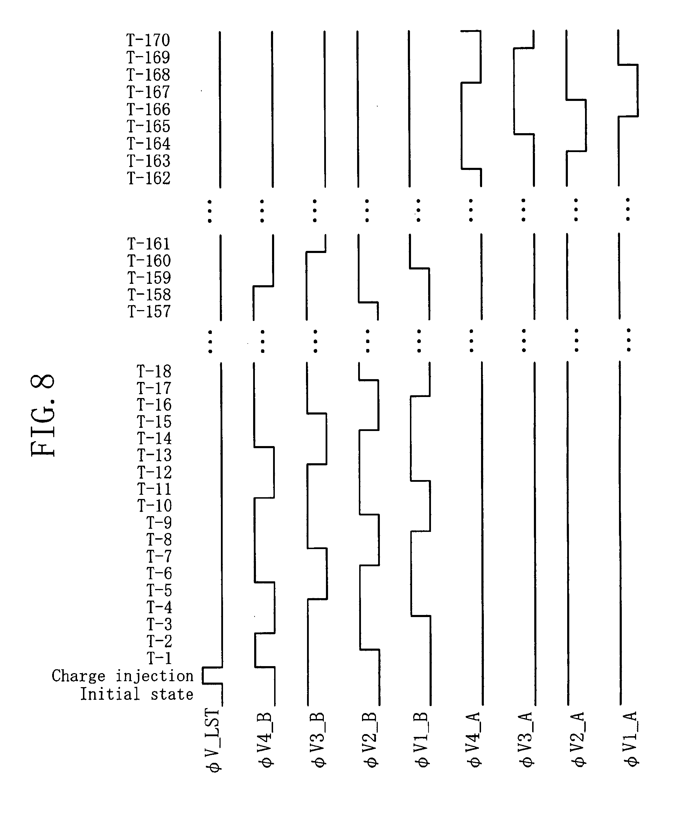

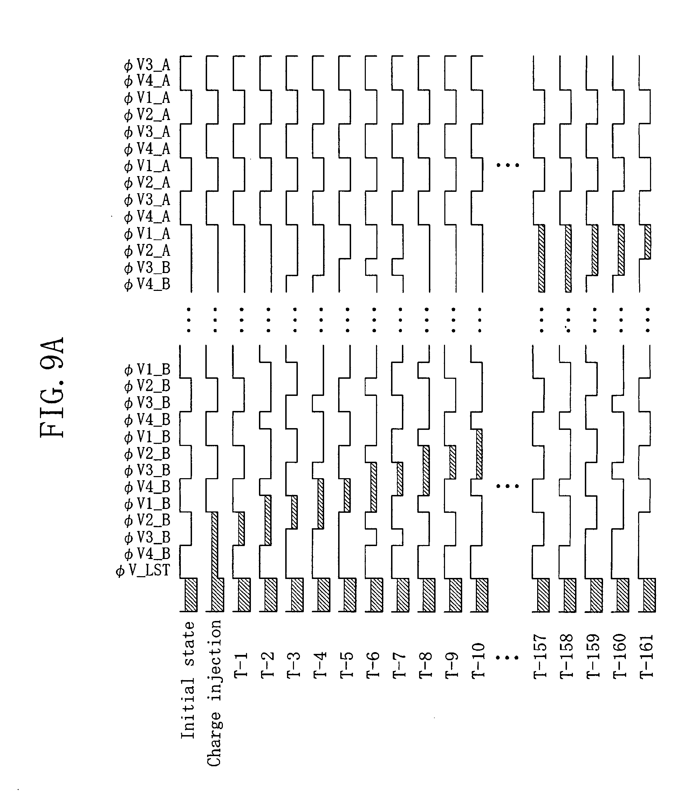

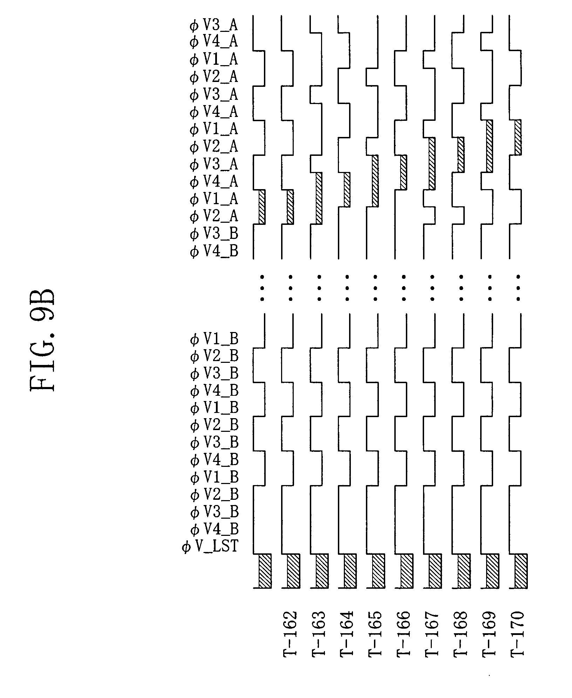

FIG. **8** is a timing chart for depicting a method of generating a marker signal using the addition method shown in FIG. **6**. FIGS. **9A** and **9B** are potential diagrams of the vertical CCDs **114, 115** corresponding to the timing chart of FIG. **8**. In this method, addition of marker signals is executed at the boundary between the marker signal generation section **102** and the image pickup section **103**.

First, generation of Q will be described with reference to FIG. **8**. The operation in the marker signal generation section **102** is shown by the initial state, charge injection and sequential operation from T-1 through T-161. During this operation, the portions of the vertical CCDs **114, 115** in the blocks of the image pickup section **103** such as blocks A and B remain at rest. On the contrary, during subsequent sequential operation from T-162 through T-170, the operation in the marker signal generation section **102** is halted, and the vertical CCDs **114, 115** of block A and B, for example, of the image pickup section **103** start transfer operation.

In the above operation, if the series of operation including the initial state, charge injection and sequential operation from T-1 through T-161 is performed twice while the operation from T-162 though T-170 is performed once, the marker signal 2Q can be generated. If it is performed three times, the marker signal 3Q can be generated.

The timing period for the above operation may be every frame or every field. Although four-phase clock was used in the above description, the number of phases of the readout gates may be increased, to allow operation of four readout gates for two vertically-adjacent pixels at individual timings (six-phase driving). In this case, also, it is possible to read the marker signal into the right and left blocks alternately every horizontal line.

Alternatively, the following is also possible. Marker signals, the number of which is equal to the number of the capacitors (marker charge storage portions) **104**, are generated in advance using the capacitors **104** as those shown in FIGS. **3A** to **3C**. Once a signal charge packet sequentially transferred in the vertical CCDs **114, 115** reaches a readout position, a marker signal is read into the packet from the capacitor **104**. The marker signal is then transferred to the second capacitor position by the vertical CCDs **114, 115**, where a marker signal held at the second capacitor position is also read into the packet in addition to the first marker signal. In this way, the marker signals stored in the capacitors **104** at different positions in the vertical direction can be read and added together in sequence.

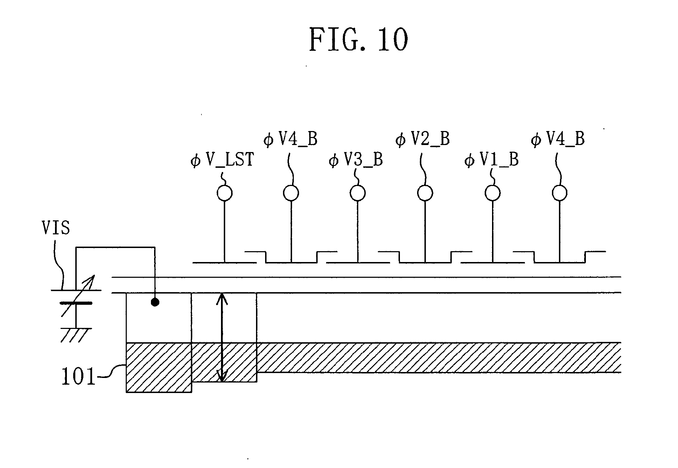

FIG. 10 illustrates that the charge amount of a marker signal in the vertical CCDs **114, 115** can be controlled by changing the potential at the input source **101** in FIG. 1. More specifically, FIG. **10** shows the potential at the input source **101** and the potentials under respective gates in the vertical CCDs **114, 115** connected to the input source **101** obtained when all of $\phi V4\_B$, $\phi V3\_B$, $\phi V2\_B$ and $\phi V1\_B$ are made HIGH (0 V) during the charge injection shown in FIG. **5A** or **9A.** If a voltage applied to $\phi V\_LST$ is sufficiently large and the channel potential under this gate thereof is greater than the channel potentials under $\phi V4\_B$, $\phi V3\_B$, $\phi V2\_B$ and $\phi V1\_B$, charge under the $\phi V4\_B$, $\phi V3\_B$, $\phi V2\_B$ and $\phi V1\_B$ can be controlled using the potential VIS at the input source **101,** and thus the sum of charge generated in the vertical CCDs **114, 115** can be controlled arbitrarily. By combining the marker signal addition method described above with this VIS control shown in FIG. **10**, it is possible to handle a number of marker signals different in magnitude more greatly, and this enables finer calibration of the input/output characteristics.

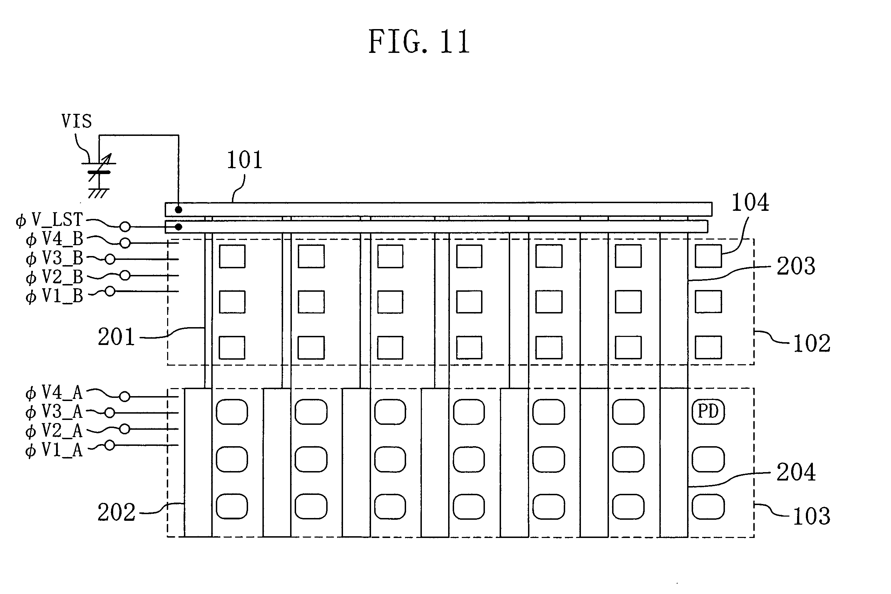

FIG. **11** illustrates a configuration adopted to generate a plurality of marker signals having different charge amounts simultaneously at the boundary between the marker signal generation section **102** and the image pickup section **103** in a block shown in FIG. **1**. In this illustration, there are shown three pixels in each of the marker signal generation section 102 and the image pickup section **103** in the vertical direction and seven pixels in the horizontal direction for convenience. The number of pixels is not limited to this.

As shown in FIG. **11**, a vertical CCD **201** in the marker signal generation section **102** and a vertical CCD **202** in the image pickup section **103** are coupled with each other, and a vertical CCD **203** in the marker signal generation section **102** and a vertical CCD **204** in the image pickup section **103** are coupled with each other, to enable transfer of marker signals from the marker signal generation section **102** to the image pickup section **103**. In the marker signal generation section **102**, the width of the vertical CCDs **201, 203** is changed in stages in the horizontal direction. The width of the vertical CCDs **202, 204** of the image pickup section **103**, as the addition part, is made larger than that of the vertical CCDs **201, 203** of the marker signal generation section **102**. This prevents occurrence of transfer degradation in the vertical direction and thus enables simultaneous generation of a plurality of marker signals having different charge amounts. To state specifically, the width of the vertical CCDs **201, 203** in the marker signal generation section **102** is increased from 0.45 μm up to 1.4 μm. With the above configuration, seven different marker signals can be read out when one horizontal line including marker signals is read. Further, by combining this configuration with the methods described above and increasing the number of packets used for addition at the boundary with the image pickup section **103** to two, three, or the like in the vertical direction, the number of different charge amounts can be increased twofold, threefold, or the like. This enables generation of marker signals finer than those shown in FIG. **7**.

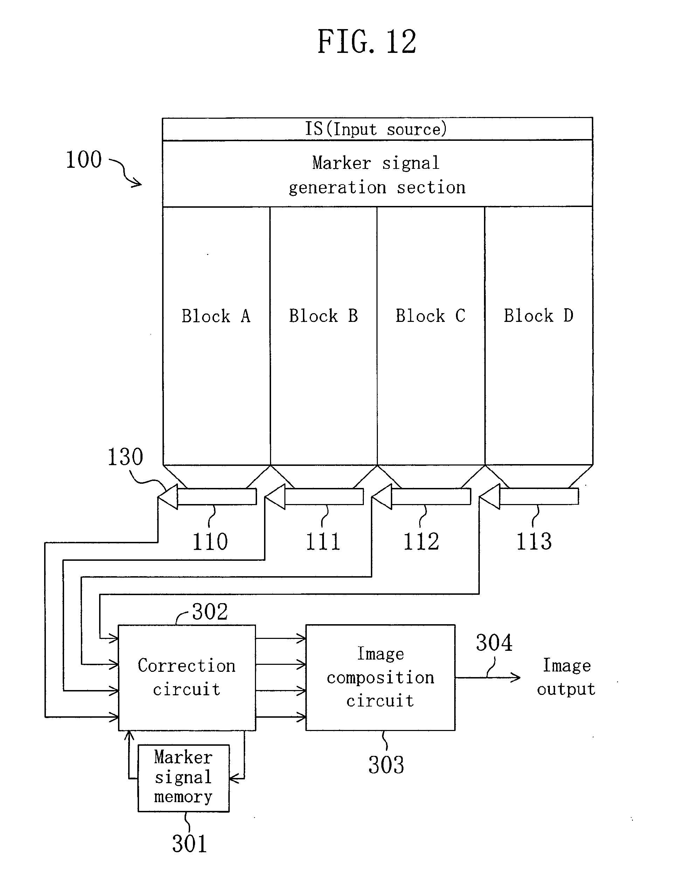

FIG. **12** illustrates the entire configuration of the solid-state image pickup apparatus of the present invention. Although the image pickup section of the image pickup device **100** is partitioned into four blocks in the illustrated example, the number of blocks is not limited to this.

An exemplary method of correction of signals from blocks A and B will be described as follows. Marker signals output from the horizontal CCDs **110, 111** via the readout amplifiers **130** are stored in a table (not shown) provided in a marker signal memory **301**, and subjected to correction of signal variation caused by inter-block variation in amplifier characteristics by a correction circuit **302**. Thereafter, from the corrected signals, one image is reproduced by an image composition circuit **303** and output (image output **304**).

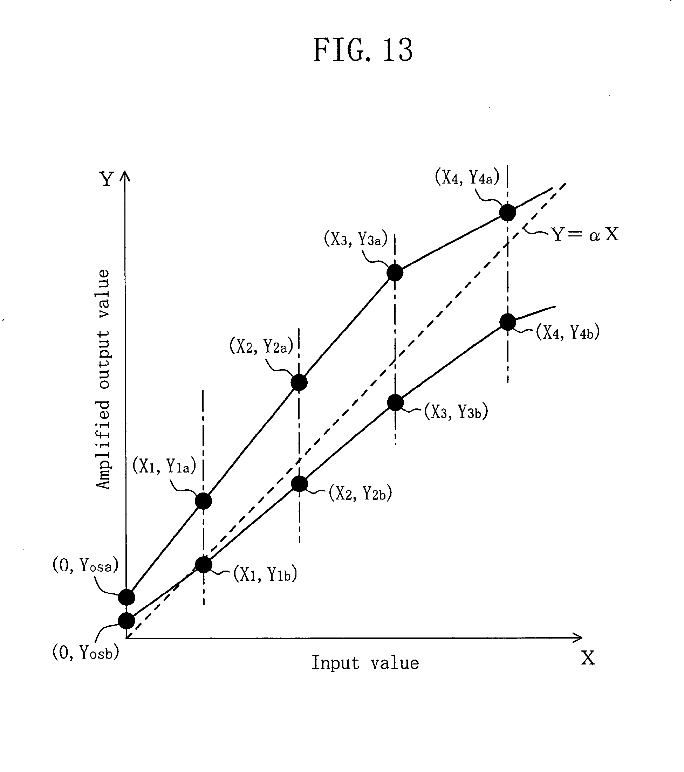

FIG. **13** shows a method of correcting the outputs of the readout amplifiers **130** of the solid-state image pickup apparatus of FIG. **12**. In the correction circuit **302**, the input/output characteristics are approximated using part or the entire of the following correction expressions, and in this way, the characteristics of the four outputs are matched with each other. Hereinafter, the case of providing four correction segments for an input range as shown in FIG. **13** will be described. Note however that the number of correction segments and the correction expressions for each segment are not limited to those described herein.

As marker signals in the respective blocks represented by an input value X and an amplified output value Y, $(0, Y_{osa})$, $(X_1, Y_{1a})$, $(X_2, Y_{2a})$, $(X_3, Y_{3a})$ and $(X_4, Y_{4a})$ are stored in a table (not shown) in the marker signal memory **301** for block A, and $(0, Y_{osb})$, $(X_1, Y_{1b})$, $(X_2, Y_{2b})$, $(X_3, Y_{3b})$ and $(X_4, Y_{4b})$ are stored for block B. The values $X_1$, $X_2$, $X_3$ and $X_4$ may be the charge amounts or the voltages actually measured, or arbitrary values conforming to these values. The following correction is performed for the image signals output from the horizontal CCDs **110** to **113**.

The output Y from block A is subjected to correction by the correction circuit **302** as follows:

in segment

$$0 \leqq Y < Y_{1a},$$

$$(Y - Y_{osa}) \times \{X_1 / (Y_{1a} - Y_{osa})\} \times \alpha;$$

in segment

$$Y_{1a} \leqq Y < Y_{2a},$$

$$(Y - Y_{1a}) \times \{(X_2 - X_1) / (Y_{2a} - Y_{1a})\} \times \alpha + \alpha X_1;$$

in segment

$$Y_{2a} \leqq Y < Y_{3a},$$

$$(Y - Y_{2a}) \times \{(X_3 - X_2) / (Y_{3a} - Y_{2a})\} \times \alpha + \alpha X_2; \text{ and}$$

in segment

$$Y_{3a} \leqq Y < Y_{4a},$$

$$(Y - Y_{3a}) \times \{(X_4 - X_3) / (Y_{4a} - Y_{3a})\} \times \alpha + \alpha X_3.$$

By the above correction, the output Y from block A roughly satisfies $Y = \alpha X$.

The output Y from block B is subjected to correction by the correction circuit **302** as follows:

in segment

$$0 \leqq Y < Y_{1b},$$

$$(Y - Y_{osb}) \times \{X_1 / (Y_{1b} - Y_{osb})\} \times \alpha;$$

in segment

$$Y_{1b} \leqq Y < Y_{2b},$$

$$(Y - Y_{1b}) \times \{(X_2 - X_1) / (Y_{2b} - Y_{1b})\} \times \alpha + \alpha X_1;$$

in segment

$$Y_{2b} \leqq Y < Y_{3b},$$

$$(Y - Y_{2b}) \times \{(X_3 - X_2) / (Y_{3b} - Y_{2b})\} \times \alpha + \alpha X_2; \text{ and}$$

in segment

$$Y_{3b} \leqq Y < Y_{4b},$$

$$(Y - Y_{3b}) \times \{(X_4 - X_3) / (Y_{4b} - Y_{3b})\} \times \alpha + \alpha X_3.$$

By the above correction, the output Y from block B also roughly satisfies $Y = \alpha X$.

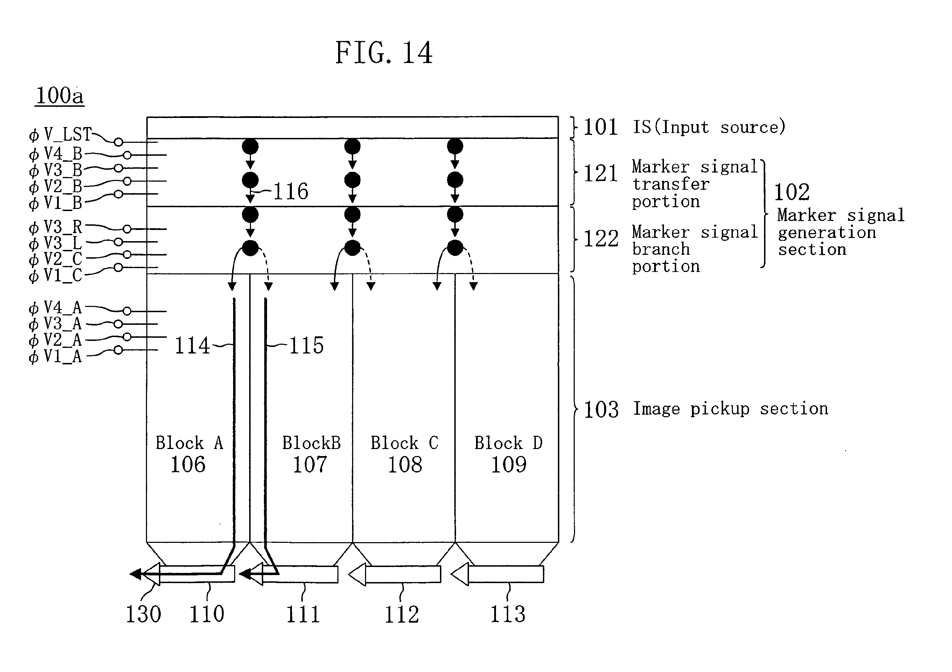

FIG. **14** illustrates another configuration of the image pickup device of the solid-state image pickup apparatus of the present invention. In the solid-state image pickup device **100** of FIG. **1**, the charge flown from the input source **101** into the vertical CCDs **114, 115** of the marker signal generation section **102** is temporarily stored in the marker charge storage portion **104** provided downstream. Marker signal charge stored in the marker charge storage portion **104** is then flown out again into the vertical CCDs **114, 115** every field or every frame, to be read into the left and right blocks A and B alternately. The readout from the marker charge storage portion **104** into the vertical CCDs **114, 115** is acceptable from the aspect of transfer efficiency. When the gates φV1_B and φV3_B of the vertical CCDs **114, 115** are turned off after charge has been flown into the marker charge storage portion **104**, the charge under these gates is distributed into the marker charge storage portion **104** and the vertical CCDs **114, 115**. At this time, if the gate area is large, the variation amount is large. In addition, charge tends to be left behind in the vertical CCDs **114, 115**. A solid-state image pickup device **100a** of FIG. **14** is configured to improve the problem at the time of turning off the gates of the vertical CCDs **114, 115** although the number of driving pulses required increases.

To state specifically, the marker signal generation section **102** of the solid-state image pickup apparatus **100a** of FIG. **14** is essentially composed of a marker signal transfer portion **121** and a marker signal branch portion **122**, so that a marker signal is flown unidirectionally from the input source **101** to the vertical CCDs **114**, **115** in the marker signal branch portion **122** via a vertical CCD **116** in the marker signal transfer portion **121**. This solid-state image pickup apparatus **100a** also adopts four-block parallel-output configuration using CCDs as shown in FIG. **1**. The difference from the configuration of FIG. **1** is that the marker signal transfer portion **121**, namely, the vertical CCD **116** in the illustrated example, is provided dedicatedly for transfer of charge from the input source **101** to the marker signal branch portion **122**. The marker signal transfer portion **121** is driven by four phase gates φV4_B, φV3_B, φV2_B and φV1_B, in addition to gate φV_LST, the marker signal branch portion **122** is driven by four phase gates φV3_R, φV3_L, φV2_C and φV1_C, and blocks A to D of the image pickup section **103** are driven by four phase gates φV4_A, φV3_A, φV2_A and φV1_A.

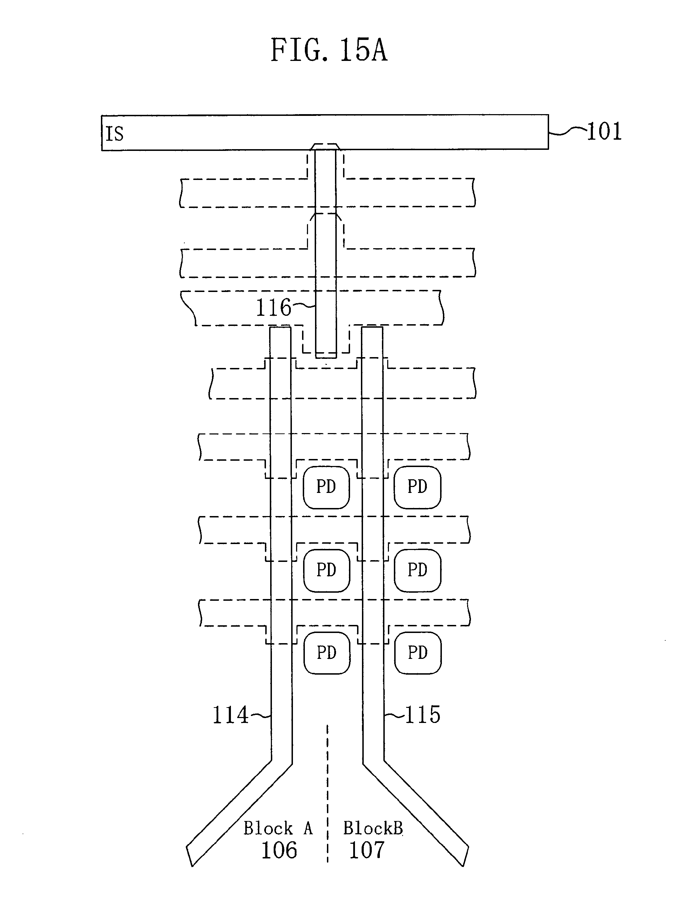

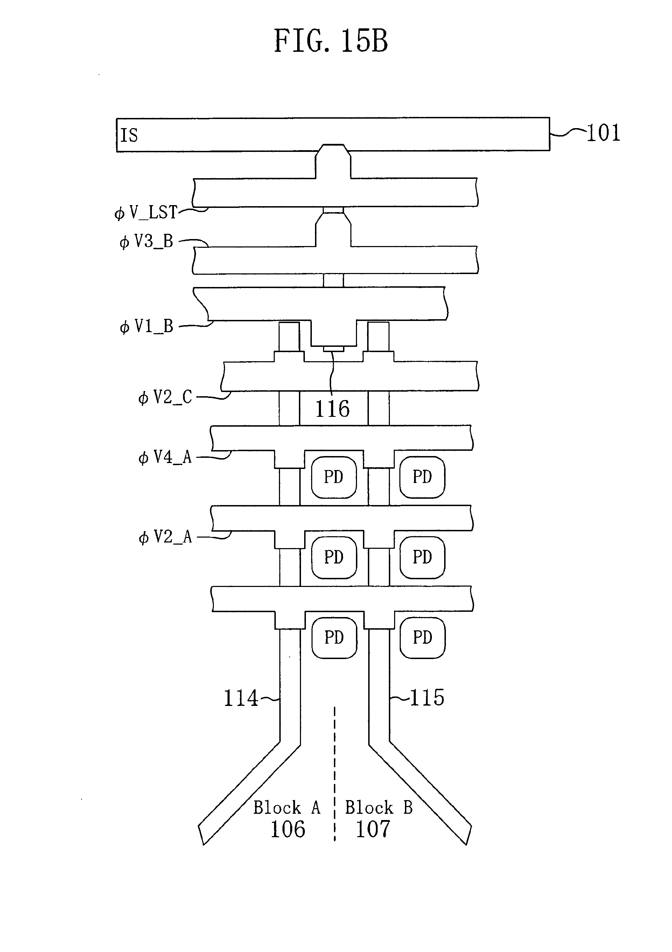

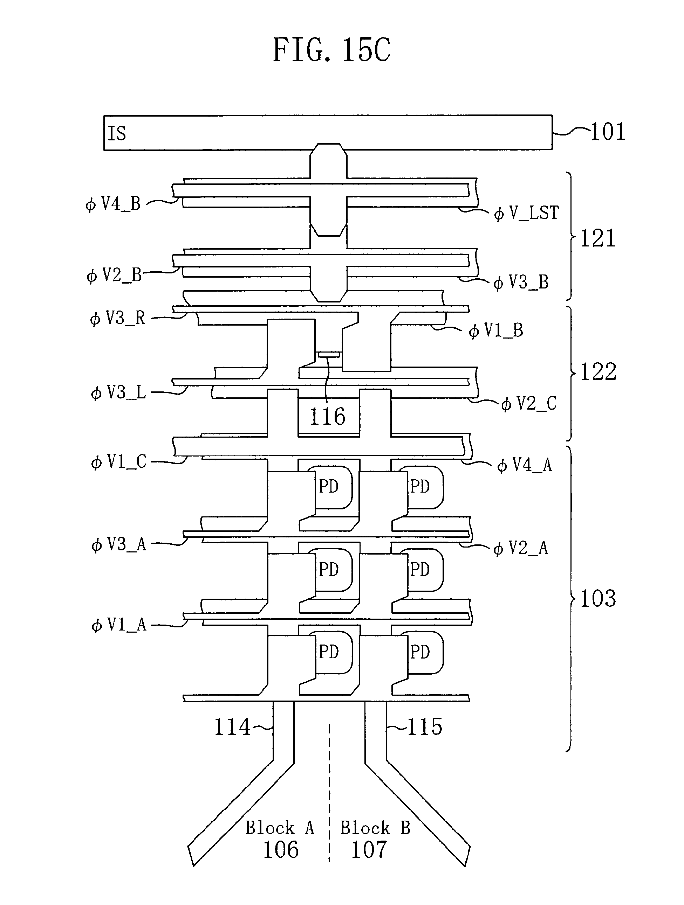

FIGS. **15A** to **15C** illustrate a process of formation of the three vertical CCDs **114** to **116** in FIG. **14**. FIG. **15A** illustrates impurity injection portions for formation of the vertical CCDs **114** to **116**. FIG. **15B** illustrates multi-phase gates formed of polysilicon on the impurity injection portions. FIG. **15C** illustrates other multi-phase gates formed of polysilicon on the already-formed multi-phase gates. The gate φV_LST is a gate for charge injection from the input source **101** into the vertical CCD **116**. The gates φV3_L and φV3_R constitute branches from the vertical CCD **116** to the left vertical CCD **114** and the right vertical CCD **115**, respectively. Although not shown, the marker signal transfer portion **121** and the marker signal branch portion **122** are covered with a metal light-shading film at the top to prevent influence of incident light.

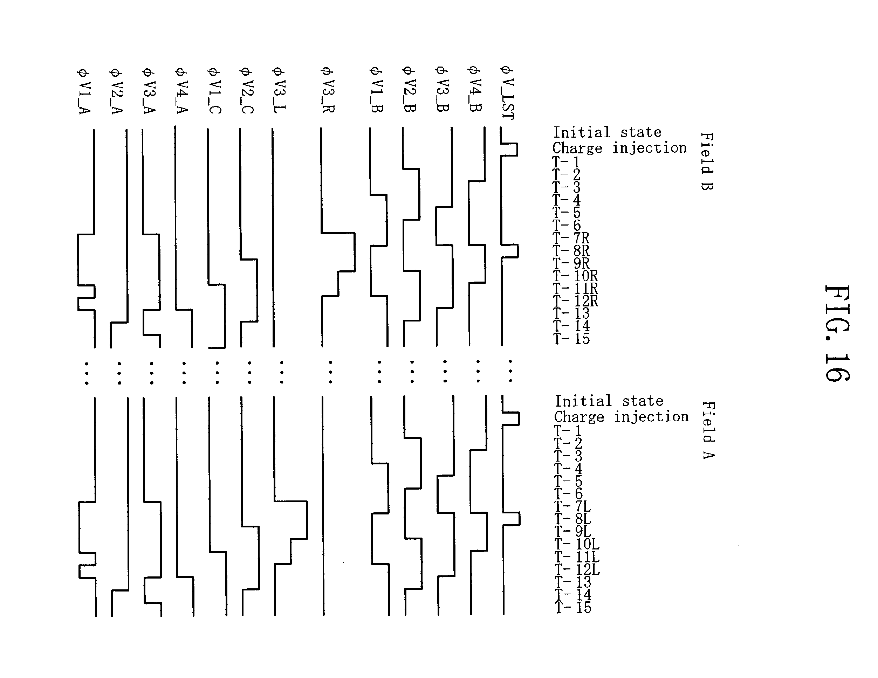

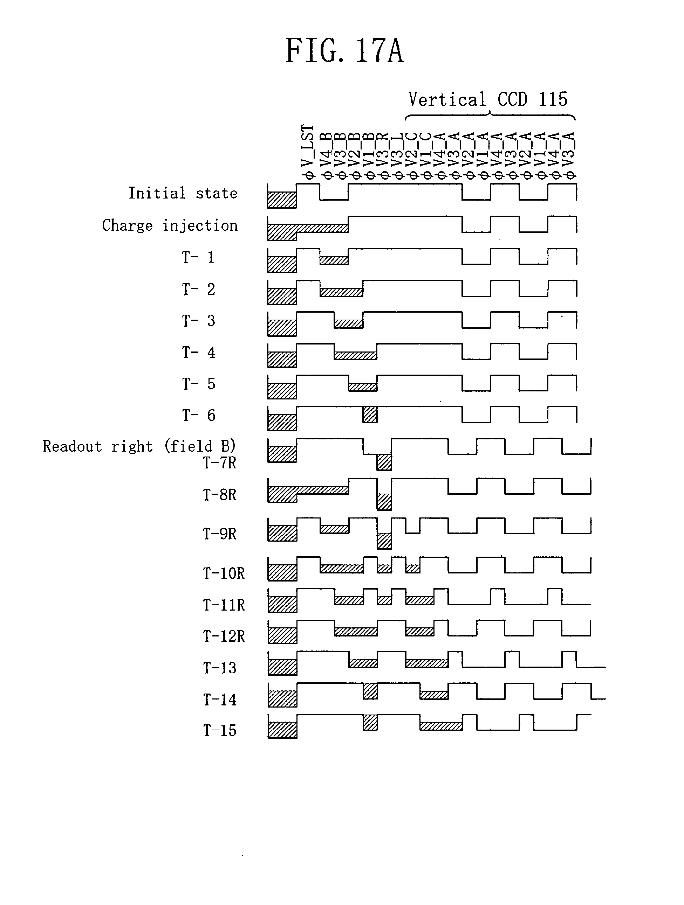

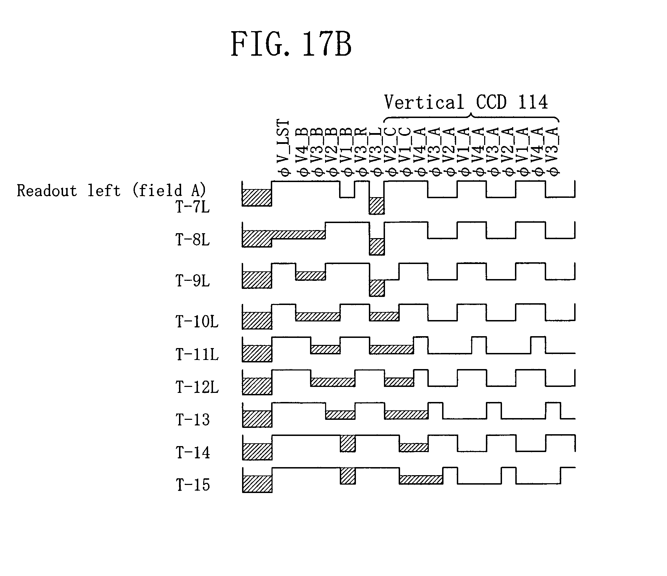

FIG. **16** is a timing chart for depicting a method of generating a marker signal in the solid-state image pickup device **100a** of FIG. **14.** FIGS. **17A** and **17B** are potential diagrams of the vertical CCDs **114** to **116** corresponding to the timing chart of FIG. **16**.

Hereinafter, the operation of introducing a marker signal into the vertical CCD **116** from the input source **101** and distributing the signal to the two vertical CCDs **114** and **115** will be described with reference to the timing chart of FIG.**16**. FIG. **16** shows the timings of the initial state, charge injection, sequential operation from T-1 through T-6, operation T-7R though T-12R for distribution to the right vertical CCD **115** in field B, subsequent normal transfer T-13 to T-15, operation T-7L though T-12L for distribution to the left vertical CCD **114** in field A, and subsequent normal transfer T-13 to T-15.

First, φV_LST is turned on (0 V) at the timing of charge injection, to allow charge to be flown from the input source **101** into the vertical CCD **116.** At this time, gates φ V4_B and φV3_B are also turned on (0 V). At the timing of T-1, φV_LST is turned off (-8 V). At the timings of T-2 to T-6, pulses of LOW (-8 V) and HIGH (0 V) are sequentially applied to the gates φV4_B through φV1_B, so that marker signal charge is transferred to the marker signal branch section **122**.

In the marker signal branch portion **122**, the marker signal charge is read into the right vertical CCD **115** by applying a readout voltage (15 V) to φV3_R during T-7R through T-9R in field B. The read marker signal charge is transferred to the upstream portion of the image pickup section **103** during T-13 through T-15. Thereafter, known vertical CCD charge transfer is performed. In field A, the marker signal charge is read into the left vertical CCD **114** by use of φV3_L at the timings T-7L through T-9L. Further, transfer is performed at the timings T-10L through T-12L. The subsequent operation is the same as in field B.

As a result of the series of potential change with time, the marker signal charge transferred in the marker signal transfer portion **121** is read from block B on the right in field B and from block A on the left in field A as marker signals having the same charge amount.

In the above description, it was assumed that two-layer polysilicon gates for transfer of marker signals were used for the vertical CCDs **114** to **116**. Alternatively, each electrode of the vertical CCDs may be contacted individually. Otherwise, the number of polysilicon layers may be increased or decreased. No problem will occur by these alternative configurations.

The period of the timing at which the signal is read into the left or right vertical CCD **114, 115** may be every frame, every field or a period shorter than a field.

Although the 12-phase clock was used in the above description, the number of phases may be decreased by sharing the gate electrode, and in this case, also, it is possible to distribute the marker signal to the right and left blocks for alternate readout.

VIS control as shown in FIG. **10** can also be adopted for the solid-state image pickup device **100a** of FIG. **14**. Naturally, the solid-state image pickup device **100** in FIG. **12** may be replaced with the solid-state image pickup device **100a** of FIG. **14**.

In any of the configurations of FIGS. **1, 10, 11** and **14**, the input source **101** may be replaced with a horizontal CCD, and a small-area input source may be provided separately for supply of a required amount of charge to the horizontal CCD.

While the present invention has been described in a preferred embodiment, it will be apparent to those skilled in the art that the disclosed invention may be modified in numerous ways and may assume many embodiments other than that specifically set out and described above. Accordingly, it is intended by the appended claims to cover all modifications of the invention which fall within the true spirit and scope of the invention.

**Claims**

1. A solid-state image pickup apparatus permitting parallel readout comprising an image pickup section partitioned into blocks and a readout amplifier for each block, the apparatus further comprising:

   a marker signal source for supplying a required amount of charge; and
   a marker signal generation section for generating marker signals having a same charge amount to be sent into two adjacent blocks of the image pickup section from the charge supplied from the marker signal source,

   wherein each of the blocks of the image pickup section transfers the marker signal sent from the marker signal generation section so that the marker signal is read out via the readout amplifier for the block for correction of an output of the readout amplifier.

2. The apparatus of Claim 1, wherein the marker signal generation section comprises:

   a marker charge storage portion for storing the charge supplied from the marker signal source; and
   means for generating marker signals to be sent into two adjacent blocks of the image pickup section from the charge stored in the marker charge storage portion.

3. The apparatus of Claim 1, wherein the marker signal generation section comprises:

   a marker signal transfer portion for transferring the charge supplied from the marker signal source as a common marker signal; and
   a marker signal branch portion for sending the common marker signal transferred from the marker signal transfer portion into two adjacent blocks of the image pickup section.

4. The apparatus of Claim 1, further comprising a horizontal CCD for each block coupled to the readout amplifier for each block,
   wherein the image pickup section has a vertical CCD and is located between the marker signal generation section and the horizontal CCD for each block.

5. The apparatus of Claim 1, wherein the marker signal generation section is shaded from light.

6. The apparatus of Claim 1, further comprising means for adding a plurality of marker signals each having a unit charge amount.

7. The apparatus of Claim 1, wherein the marker signal source comprises an input source for supplying an amount of charge corresponding to a given potential.

8. The apparatus of Claim 7, further comprising means for changing the potential at the input source.

9. The apparatus of Claim 4, wherein the marker signal generation section has a vertical CCD, and the width of the vertical CCD is equal to or less than the width of the vertical CCD of the image pickup section.

10. The apparatus of Claim 1, further comprising:

    a marker signal memory for recording the marker signal for each block; and
    a correction circuit for correcting an image output of the readout amplifier according to the record in the marker signal memory.

11. The apparatus of Claim 10, wherein the correction circuit is configured to attain nonlinear correction by performing linear conversion of the image output for each segment.

12. A method for driving a solid-state image pickup apparatus permitting parallel readout comprising an image pickup section partitioned into blocks and a readout amplifier for each block, the method comprising the steps of:

generating marker signals for correction of outputs of the readout amplifiers;
reading the generated marker signals having a same charge amount via the readout amplifiers for two adjacent blocks; and
generating another marker signal by adding a plurality of marker signals each having a unit charge amount.

**13.** The method of Claim 12, further comprising the step of:

executing the addition of marker signals in a vertical CCD.

# FIG. 1

100

φ V_LST

φ V4_B

φ V3_B

φ V2_B

φ V1_B

104

φ V4_A

φ V3_A

φ V2_A

φ V1_A

114    115

101 IS (Input source)

102 Marker signal
generation section

103 Image pickup
section

| Block A 106 | Block B 107 | Block C 108 | Block D 109 |

130    110    111    112    113

EP 1 241 872 A2

# FIG. 2

## FIG. 3A

## FIG. 3B

$\phi$ V3_B

$\phi$ V1_B

114~            ~115

# FIG. 3C

$\phi\,V2\_B$

114~

~115

FIG. 4

# FIG. 5A

EP 1 241 872 A2

FIG. 5B

Field A readout A right

Field A readout A left

T-A1 right

T-A1 left

Field B readout B right

Field B readout B left

T-B1 right

T-B1 left

EP 1 241 872 A2

# FIG. 6

# FIG. 7

18

FIG. 8

FIG. 9A

FIG. 9B

## FIG. 10

# FIG. 11

VIS

φ V_LST
φ V4_B
φ V3_B
φ V2_B
φ V1_B

φ V4_A
φ V3_A
φ V2_A
φ V1_A

101
104
203
201
102
202
204
103

PD

EP 1 241 872 A2

# FIG. 12

IS(Input source)

Marker signal
generation section

100

| Block A | Block B | Block C | Block D |

130

110    111    112    113

302

Correction
circuit

Image
composition
circuit

304

Image
output

303

Marker
signal
memory

301

# FIG. 13

# FIG. 14

100a

φV_LST
φV4_B
φV3_B
φV2_B
φV1_B

—116

101 IS(Input source)

121 Marker signal transfer portion

102 Marker signal generation section

φV3_R
φV3_L
φV2_C
φV1_C

122 Marker signal branch portion

φV4_A
φV3_A
φV2_A
φV1_A

114    115

103 Image pickup section

| Block A 106 | BlockB 107 | Block C 108 | Block D 109 |

130    110    111    112    113

EP 1 241 872 A2

# FIG. 15A

IS ⌇~101

116~

PD | PD
PD | PD
PD | PD

114~ | ~115

Block A | BlockB
106 | 107

# FIG. 15B

IS ~101

φ V_LST

φ V3_B

φ V1_B

φ V2_C

116

φ V4_A

PD    PD

φ V2_A

PD    PD

PD    PD

114~    ~115

Block A ┊ Block B
106   ┊  107

# FIG. 15C

IS ~~~~ 101

φV4_B ~~~~ φV_LST

121

φV2_B ~~~~ φV3_B

φV3_R ~~~~ φV1_B

122

φV3_L ~~~~ φV2_C

116

φV1_C ~~~~ φV4_A

PD   PD

103

φV3_A ~~~~ φV2_A

PD   PD

φV1_A

PD   PD

114~ ~115

Block A | Block B
106      107

# FIG. 16

# FIG. 17A

# FIG. 17B

Vertical CCD 114

Readout left (field A)
T-7L
T-8L
T-9L
T-10L
T-11L
T-12L
T-13
T-14
T-15